# EUROPÄISCHE PATENTSCHRIFT

(11) **EP 3 821 771 B1**
(45) Veröffentlichungstag und Bekanntmachung des Hinweises auf die Patenterteilung: **07.12.2022**
(21) Anmeldenummer: 20204261.0
(22) Anmeldetag: 28.10.2020
(51) Int. Cl.: A47J 31/52, A47J 31/44, A47J 31/46

(54) **GETRÄNKEMASCHINE**
DRINKS MACHINE
MACHINE À BOISSONS

(30) Priorität: 15.11.2019 DE 102019217639
(43) Veröffentlichungstag der Anmeldung: 19.05.2021
(73) Patentinhaber: BSH Hausgeräte GmbH, 81739 München (DE)
(72) Erfinder: Einsiedler, Thomas, 83278 Traunstein (DE); Sollmann, Martin, 83278 Traunstein (DE); Steffl, Michael, 83250 Marquartstein (DE)

(56) Entgegenhaltungen:
- WO-A1-2018/156361
- WO-A1-2019/107039

## Beschreibung

Die vorliegende Erfindung betrifft eine Getränkemaschine, an der ein Behälter austauschbar anbringbar ist. Die Erfindung betrifft des Weiteren ein Verfahren zum Erkennen einer fehlerhaften Verbindung zwischen einem solchen Behälter und einer solchen Getränkemaschine.

Gattungsgemäße Getränkemaschinen dienen der Ausgabe eines Getränks. Insbesondere kann in derartigen Getränkemaschinen auch eine Zubereitung des Getränks stattfinden. Im Betrieb der Getränkemaschine strömt dabei eine Flüssigkeit, beispielsweise Wasser, und/oder das Getränk durch ein Kanalsystem der Getränkemaschine. Derartige Getränkemaschinen weisen üblicherweise einen Anschluss ihres Kanalsystems auf, über den ein Behälter fluidisch mit dem Kanalsystem verbunden werden kann, um eine Flüssigkeit und/oder eine Substanz in das Kanalsystem einzubringen. Die Getränkemaschinen weisen zum Fördern von Flüssigkeit durch das Kanalsystem in der Regel eine Fördereinrichtung, beispielsweise eine Pumpe auf. Zudem weisen derartige Getränkemaschinen in der Regel eine Einrichtung zum Ermitteln der Strömung von Flüssigkeit durch das Kanalsystem auf, welche nachfolgend auch als Strömungsmesseinrichtung bezeichnet wird.

Aus dem Dokument WO 2018/156361 ist eine solche Getränkemaschine bekannt.

Im Betrieb der Getränkemaschine ist es wünschenswert und/oder wichtig, das Vorhandensein von Behältern, das heißt insbesondere eine fluidische Verbindung zwischen dem Behälter und dem Kanalsystem, festzustellen. Bekannt ist es, zu diesem Zweck an der Getränkemaschine und/oder am Behälter entsprechende Komponenten und/oder Einrichtungen vorzusehen. Hierzu zählen beispielsweise Sensoren, Lichtschranken, Mikroschalter, Reed-Relais usw. Dies führt dazu, dass für den jeweiligen Behälter entsprechende separat vorhandene Komponenten und Einrichtungen vorzusehen sind, welche die Herstellung der Getränkemaschine aufwändiger und/oder teurer machen.

Die vorliegende Erfindung beschäftigt sich daher mit der Aufgabe, für eine Getränkemaschine der eingangs genannten Art sowie für ein Verfahren zum Erkennen einer fehlerhaften fluidischen Verbindung eines Behälters an einer Getränkemaschine verbesserte oder zumindest andere Ausführungsformen anzugeben, welche sich insbesondere durch eine vereinfachte und/oder kostengünstige Umsetzung auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, eine fehlerhafte fluidische Verbindung eines an einer Getränkemaschine austauschbar anbringbaren Behälters, aus dem im Betrieb Flüssigkeit gefördert wird, an der Getränkemaschine anhand der Strömung von Flüssigkeit weg vom Behälter zu erkennen. Somit ist es zum Erkennen der fehlerhaften fluidischen Verbindung des Behälters an der Getränkemaschine und somit auch eines fehlenden Behälters ausreichend, eine Strömung der Flüssigkeit zwischen einem Anschluss für den Behälter und einer Fördereinrichtung zum Fördern der Flüssigkeit durch ein Kanalsystem des Behälters zu ermitteln. Auf diese Weise können weitere Komponenten, wie beispielsweise Sensoren, Lichtschranken, Reed-Schalter und dergleichen, zum Erkennen einer fehlerhaften fluidischen Verbindung zwischen dem Behälter und der Getränkemaschine entfallen. Folglich ist die Getränkemaschine auf diese Weise vereinfacht und kostengünstig herstellbar. Zudem kann somit in zuverlässiger Weise eine korrekte fluidische Verbindung des Behälters mit dem Kanalsystem der Getränkemaschine sowie das Fehlen des Behälters erkannt werden.

Dem Erfindungsgedanken entsprechend weist die Getränkemaschine ein Kanalsystem mit einem fluidischen Anschluss auf, an den der Behälter austauschbar anbringbar ist, wobei der Behälter bei korrekt am Anschluss angebrachten Zustand über den Anschluss fluidisch fehlerfrei mit dem Kanalsystem verbunden ist. Die Getränkemaschine weist ferner eine Fördereinrichtung, insbesondere eine Pumpe, auf, welche in einem Pumpenbetrieb Flüssigkeit in Richtung des Anschlusses und in einem Saugbetrieb Flüssigkeit aus dem Anschluss fördert, derart, dass bei fluidischer Verbindung zwischen dem Anschluss und dem Behälter und somit zwischen dem Kanalsystem und dem Behälter die Fördereinrichtung im Pumpenbetrieb Flüssigkeit in den Behälter und im Saugbetrieb Flüssigkeit aus dem Behälter fördert. Die Getränkemaschine weist ferner eine Strömungsmesseinrichtung auf, die im Betrieb eine Strömung zwischen dem Anschluss und der Fördereinrichtung ermittelt. Die Getränkemaschine weist ferner eine Steuereinrichtung auf, welche kommunizierend mit der Fördereinrichtung und der Strömungsmesseinrichtung verbunden ist. Die Steuereinrichtung ist derart ausgestaltet, dass sie zum Erkennen einer fehlerhaften fluidischen Verbindung des Behälters mit dem Anschluss und somit des Behälters mit dem Kanalsystem die Fördereinrichtung im Pumpenbetrieb und anschließend im Saugbetrieb betreibt und im Saugbetrieb eine fehlerhafte fluidische Verbindung des Behälters mit dem Anschluss erkennt, wenn die mit der Strömungsmesseinrichtung ermittelte Strömung unterhalb eines vorgegebenen Wertes liegt. Die Steuereinrichtung ist ferner derart ausgestaltet, dass sie beim Erkennen einer solchen fehlerhaften fluidischen Verbindung eine Fehlermeldung erzeugt.

Eine fehlerhafte fluidische Verbindung zwischen dem Behälter und dem Anschluss und somit zwischen dem Behälter und dem Kanalsystem kann insbesondere vorliegen, wenn der Behälter nicht oder nicht in vorgesehener Weise am Anschluss angebracht ist. Somit wird mit der Erkennung der fehlerhaften fluidischen Verbindung zwischen dem Behälter und dem Anschluss erkannt, ob der Behälter, der austauschbar über den Anschluss an der Getränkemaschine anbringbar ist, an der Getränkemaschine angebracht und/oder in vorgesehener Weise an der Getränkemaschine angebracht ist. Dementsprechend sind vorliegend unter fehlerhafte fluidische Verbindung auch eine fehlende fluidische Verbindung und somit das Fehlen des Behälters zu verstehen.

Die Strömungsmesseinrichtung dient zweckmäßig dem Ermitteln der Strömung zwischen dem Anschluss und der Fördereinrichtung. Dabei kann die Strömungsmesseinrichtung insbesondere derart ausgestaltet sein, dass sie einen Volumenstrom der Flüssigkeit zwischen dem Anschluss und der Fördereinrichtung ermittelt.

Zu diesem Zweck kann die Strömungsmesseinrichtung beliebig im Kanalsystem angeordnet sein. Insbesondere ist die Strömungsmesseinrichtung fluidisch zwischen dem Anschluss und der Fördereinrichtung angeordnet.

Vorteilhaft wird zum Erkennen der fehlerhaften fluidischen Verbindung das im Pumpenbetrieb in Richtung des Behälters geförderte Flüssigkeit im anschließenden Saugbetrieb zumindest teilweise aus dem Behälter gefördert, so dass eine fehlerhafte fluidische Verbindung zwischen dem Behälter und dem Anschluss keine solche Förderung der Flüssigkeit im Saugbetrieb zulässt. Dementsprechend ist der vorgegebene Wert derart, dass eine solche, fehlende Förderung der Flüssigkeit aus dem Behälter widergespiegelt ist. Insbesondere kann der vorgegebene Wert Null betragen. Das heißt, dass der vorgegebene Wert derart ist, dass bei fehlender Strömung von Flüssigkeit im Saugbetrieb eine fehlerhafte fluidische Verbindung zwischen dem Behälter und dem Anschluss erkannt wird.

Bevorzugt sind Ausführungsformen, bei denen die Getränkemaschine eine Abtropfschale aufweist, die fluidisch mit dem Kanalsystem verbunden ist. Die fluidische Verbindung der Abtropfschale mit dem Kanalsystem ist derart, dass bei fehlerhafter fluidischer Verbindung zwischen dem Behälter und dem Anschluss im Pumpenbetrieb die in Richtung des Anschlusses geförderte Flüssigkeit zumindest teilweise, vorzugsweise gänzlich, in die Abtropfschale strömt. Auf diese Weise werden bei fehlerhafter fluidischer Verbindung des Anschlusses mit dem Behälter durch Austritt der Flüssigkeit aus dem Kanalsystem bedingte Beschädigungen und/oder Verunreinigungen vermieden oder zumindest reduziert.

Der Behälter kann prinzipiell ein Beliebiger sein, in den bei fehlerfreier fluidischer Verbindung die Flüssigkeit gefördert und aus dem die Flüssigkeit gefördert werden kann.

Der Behälter ist insbesondere ein solcher, in dem eine Substanz zur Pflege des Kanalsystems bevorratet ist, so dass beim Fördern der Flüssigkeit in dem Behälter die Substanz im anschließenden Saugbetrieb aus dem Behälter gefördert wird, um das Kanalsystem zu pflegen.

Die Substanz kann zu diesem Zweck einen das Kanalsystem entkalkenden Entkalker enthalten. Alternativ oder zusätzlich kann die Substanz einen das Kanalsystem reinigenden Reiniger enthalten.

Der austauschbar an der Getränkemaschine anbringbare Behälter kann prinzipiell beliebig ausgestaltet sein. Insbesondere kann der Behälter derart ausgestaltet sein, dass er nach Verbrauch der Substanz erneut mit der Substanz oder einer anderen Substanz befüllt werden kann.

Vorstellbar ist es auch, den Behälter als eine Kartusche auszubilden. Bei dem Behälter kann es sich also insbesondere um eine die Substanz, insbesondere einen Entkalker und/oder einen Reiniger, bevorratende Kartusche handeln, welche austauschbar über den Anschluss an der Getränkemaschine anbringbar ist.

Vorteilhaft sind Ausführungsformen, bei denen die Getränkemaschine eine Signaleinrichtung zur Ausgabe eines Signals aufweist, welche kommunizierend mit der Steuereinrichtung verbunden ist. Die Steuereinrichtung ist dabei vorteilhaft derart ausgestaltet, dass sie die Fehlermeldung über die Signaleinrichtung als ein Signal und somit als ein Fehlersignal ausgibt. Bei dem Signal kann es sich insbesondere um ein optisches und/oder ein akustisches Signal handeln.

Die Getränkemaschine kann prinzipiell beliebig ausgestaltet sein. Insbesondere kann die Getränkemaschine zur Ausgabe und/oder Zubereitung eines beliebigen Getränks ausgestaltet sein. Beispielsweise kann es sich bei der Getränkemaschine um eine Kaffeemaschine, insbesondere um einen Kaffeevollautomaten, handeln.

Es versteht sich, dass neben der Getränkemaschine auch das Verfahren zum Erkennen der fehlerhaften fluidischen Verbindung des Behälters mit dem Anschluss der Getränkemaschine als solches zum Umfang dieser Erfindung gehört.

Bei dem Verfahren wird dabei zunächst Flüssigkeit in Richtung des Anschlusses und anschließend aus dem Anschluss gefördert, wobei eine fehlerhafte fluidische Verbindung des Behälters mit dem Anschluss erkannt wird, wenn die ermittelte Strömung beim Fördern der Flüssigkeit aus dem Anschluss unterhalb eines vorgegebenen Wertes liegt.

Bei bevorzugten Ausführungsformen wird die fehlerhafte fluidische Verbindung des Behälters mit dem Anschluss erkannt, wenn die ermittelte Strömung innerhalb einer vorgegebenen Dauer unterhalb des vorgegebenen Wertes liegt bzw. fällt. Hierdurch wird insbesondere berücksichtigt, dass sich zwischen dem Anschluss und der Strömungsmesseinrichtung und somit außerhalb des Behälters Flüssigkeit befinden kann, die mit der Fördereinrichtung ebenfalls gefördert wird, jedoch nicht bedeutet, dass der Behälter mit dem Anschluss fluidisch fehlerfrei verbunden ist.

Vorteilhaft ist es, wenn die fehlerhafte fluidische Verbindung des Behälters mit dem Anschluss erkannt wird, wenn die ermittelte Strömung innerhalb einer vorgegebenen Dauer, insbesondere der vorstehend erwähnten vorgegebenen Dauer, die ermittelte Strömung unterbrochen ist, der vorgegebene Wert also Null oder geringfügig über Null ist.

Die vorgegebene Dauer ist hierbei insbesondere abhängig von der Förderleistung der Fördereinrichtung und/oder der Menge der im Pumpenbetrieb geförderten Flüssigkeit.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine stark vereinfachte, schaltplanartige Darstellung einer Getränkemaschine mit einem austauschbaren Behälter,
- Fig. 2: ein Flussdiagramm zur Erläuterung der Erkennung einer fehlerhaften Verbindung des Behälters mit der Getränkemaschine.

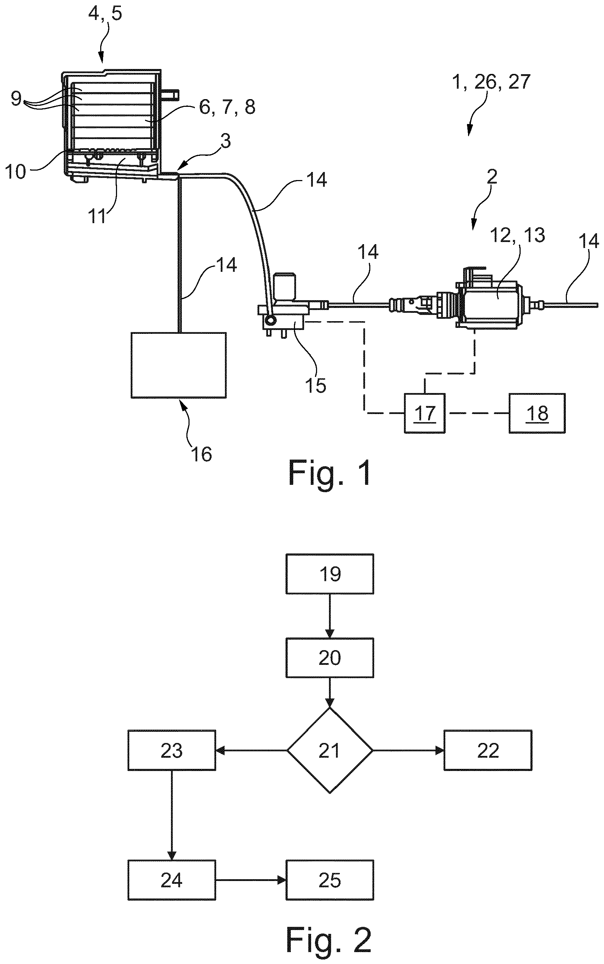

Eine Getränkemaschine 1, wie sie beispielhaft in Figur 1 stark vereinfacht und schaltplanartig dargestellt ist, dient der Ausgabe und/oder Zubereitung eines nicht gezeigten Getränks. Zu diesem Zweck weist die Getränkemaschine 1 ein Kanalsystem 2 auf, durch das im Betrieb eine Flüssigkeit strömt. Am Kanalsystem 2 ist ein Anschluss 3 vorgesehen, über welchen ein Behälter 4 austauschbar angebracht werden fluidisch mit dem Kanalsystem 2 verbunden werden kann. Das heißt, dass bei einem korrekten Anbringen des Behälters 4 am Anschluss 3 eine fehlerfreie fluidische Verbindung zwischen dem Behälter 4 und dem Kanalsystem 2 über den Anschluss 3 gegeben ist. Der Behälter 4 ist im Beispiel der Figur 1 eine Kartusche 5, in welchem eine Substanz 6 zum Pflegen des Kanalsystems 2, beispielsweise ein Entkalker 7 zum Entkalken des Kanalsystems 2 und/oder ein Reiniger 8 zum Reinigen des Kanalsystems 2, bevorratet ist. Beim Beispiel der Figur 1 liegt die Substanz 6 in Form von Tabletten 9 vor, welche auf einem Sieb 10 aufliegen und durch das Sieb 10 zu einem Volumen 11 des Behälters 4 beabstandet sind, in das bei fluidischer Verbindung zwischen dem Behälter 4 und dem Kanalsystem 2 Flüssigkeit eingebracht und aus welchem Flüssigkeit entnommen werden kann, das die Substanz 6 enthalten kann. Die Getränkemaschine 2 weist ferner eine Fördereinrichtung 12, insbesondere eine Pumpe 13 auf, welche im Betrieb Flüssigkeit durch das Kanalsystem 2 fördert. Das Kanalsystem 2 weist einzelne Kanäle 14 auf, welche im Betrieb, das heißt insbesondere im Betrieb der Fördereinrichtung 12, jeweils von der Flüssigkeit, insbesondere von Wasser, durchströmt werden können. Die Getränkemaschine 1 weist zudem eine Strömungsmesseinrichtung 15 auf, die im Betrieb eine Strömung, insbesondere einen Volumenstrom, von Flüssigkeit zwischen der Fördereinrichtung 12 und dem Anschluss 3 ermittelt. Im gezeigten Beispiel ist die Strömungsmesseinrichtung 15 fluidisch zwischen dem Anschluss 3 und der Fördereinrichtung 12 angeordnet. Im gezeigten Beispiel weist die Getränkemaschine 1 ferner eine Abtropfschale 16 auf, welche auf geeignete Weise fluidisch mit dem Kanalsystem 2 verbunden ist. Vorzugsweise ist die Abtropfschale 16 im Bereich des Anschlusses 3 fluidisch mit dem Kanalsystem 2 verbunden. Die Getränkemaschine 1 weist eine Steuereinrichtung 17 auf, welche kommunizierend mit der Fördereinrichtung 12 und der Strömungsmesseinrichtung 15 verbunden ist. Die Getränkemaschine kann ferner eine Signaleinrichtung 18 aufweisen, mit der ein Signal, insbesondere ein optisches und/oder akustisches Signal, ausgegeben werden kann und welche kommunizierend mit der Steuereinrichtung 17 verbunden ist.

Die Fördereinrichtung 12 kann in einem Pumpenbetrieb und in einem Saugbetrieb betrieben werden. Im Pumpenbetrieb fördert die Fördereinrichtung 12 aus einer vom gezeigten Behälter 4 separaten, nicht gezeigten Quelle Flüssigkeit in Richtung des Anschlusses 3, so dass bei am Anschluss 3 angebrachten Behälter 4 und fluidischer Verbindung zwischen dem Anschluss 3 und dem Behälter 2 die Flüssigkeit in den Behälter 2, insbesondere in das Volumen 11, gefördert wird. Die Fördereinrichtung 12 kann ferner in einem Saugbetrieb betrieben werden, in welchem Flüssigkeit aus dem Anschluss 3 gefördert wird, so dass bei am Anschluss 3 angebrachtem Behälter 4 und fluidischer Verbindung des Behälters 4 mit dem Anschluss 3 Flüssigkeit aus dem Behälter 4, insbesondere aus dem Volumen 11, gefördert wird.

Zum Erkennen einer fehlerhaften fluidischen Verbindung zwischen dem Behälter 4 und dem Anschluss 3 und somit auch zum Erkennen des Fehlens des Behälters 4 wird gemäß dem in Figur 2 gezeigten Flussdiagramm verfahren, wobei zu diesem Zweck die Steuereinrichtung 17 zum Einsatz kommt, die entsprechend ausgestaltet ist.

In einem ersten Verfahrensschritt 19 wird die Fördereinrichtung 12 im Pumpenbetrieb betrieben und fördert somit Flüssigkeit in Richtung des Anschlusses 3. Ist der Behälter 4 am Anschluss 3 angebracht und fehlerfrei fluidisch mit dem Anschluss 3 verbunden, so wird die Flüssigkeit somit in den Behälter 4, insbesondere in das Volumen 11, gefördert. Ist der Behälter 4 fluidisch fehlerhaft mit dem Anschluss 3 verbunden oder fällt der Behälter 4, strömt die im Pumpenbetrieb geförderte Flüssigkeit zumindest teilweise in die Abtropfschale 16. Anschließend wird die Fördereinrichtung 12 in einem weiteren Verfahrensschritt 20 im Saugbetrieb betrieben. Die Fördereinrichtung 12 fördert also Flüssigkeit aus dem Anschluss 3. Im Saugbetrieb erfolgt in einem Vergleichsschritt 21 mit Hilfe der Strömungsmesseinrichtung 15 das Ermitteln der Strömung von Flüssigkeit. Im Vergleichsschritt 21 wird dabei verglichen, ob die Strömung im Saugbetrieb unterhalb oder oberhalb eines vorgegebenen Wertes liegt. Liegt die Strömung innerhalb einer vorgegebenen Dauer oberhalb des vorgegebenen Werts, so wird in einem Verfahrensschritt 22 das Vorhandensein des Behälters 4 und eine fehlerfreie fluidische Verbindung zwischen dem Behälter 4 und dem Anschluss 3 festgestellt. Hierbei sind der vorgegebene Wert und die vorgegebene Dauer derart gewählt, dass die zuvor im Pumpenbetrieb in den Behälter 4 geförderte Flüssigkeit im anschließenden Saugbetrieb zumindest teilweise, vorzugsweise gänzlich, aus dem Behälter 4 gefördert wird.

Liegt die ermittelte Strömung demgegenüber unterhalb des vorgegebenen Wertes, so wird in einem Verfahrensschritt 23 erkannt, dass die fluidische Verbindung zwischen dem Anschluss 3 und dem Behälter 4 fehlerhaft ist, wobei diese fehlerhafte Verbindung auch ein Fehlen des Behälters 4 umfasst. Hierbei wird die Kenntnis genutzt, dass bei fehlendem Behälter 4 bzw. fehlerhafter fluidischer Verbindung zwischen dem Anschluss 3 und dem Behälter 4 die zuvor in Richtung des Anschlusses geförderte Flüssigkeit nicht oder in verringertem Volumen aus dem Behälter 4 gefördert werden kann. Dementsprechend wird in einem Verfahrensschritt 24 eine Fehlermeldung erzeugt. Zudem kann in einem anschließenden Verfahrensschritt 25 über die Signaleinrichtung 18 ein Signal bzw. ein Fehlersignal ausgegeben werden.

Bei der Getränkemaschine 1 kann es sich um eine beliebige Getränkemaschine 1 handeln. Bei der Getränkemaschine 1 handelt es sich beispielsweise um eine Kaffeemaschine 26, insbesondere um einen Kaffeevollautomaten 27, zur Zubereitung und Ausgabe von Kaffee, wobei die Kaffeemaschine 26 zu diesem Zweck eine nicht gezeigte Brüheinheit aufweisen kann.

### Bezugszeichenliste

- 1: Getränkemaschine
- 2: Kanalsystem
- 3: Anschluss
- 4: Behälter
- 5: Kartusche
- 6: Substanz
- 7: Entkalker
- 8: Reiniger
- 9: Tablette
- 10: Sieb
- 11: Volumen
- 12: Fördereinrichtung
- 13: Pumpe
- 14: Kanal
- 15: Strömungsmesseinrichtung
- 16: Abtropfschale
- 17: Steuereinrichtung
- 18: Signaleinrichtung
- 19: Verfahrensschritt
- 20: Verfahrensschritt
- 21: Vergleichsschritt
- 22: Verfahrensschritt
- 23: Verfahrensschritt
- 24: Verfahrensschritt
- 25: Verfahrensschritt
- 26: Kaffeemaschine
- 27: Kaffeevollautomat

## Patentansprüche

1. Getränkemaschine (1), insbesondere Kaffeemaschine (26), mit einem Behälter (4), der an einem fluidischen Anschluss (3) eines Kanalsystems (2) der Getränkemaschine (1) austauschbar anbringbar ist; mit einer Fördereinrichtung (12), die in einem Pumpbetrieb Flüssigkeit in Richtung des Anschlusses (3) fördert und in einem Saugbetrieb Flüssigkeit aus dem Anschluss (3) fördert, derart, dass bei fluidischer Verbindung zwischen dem Anschluss (3) und dem Behälter (4) die Fördereinrichtung (12) im Pumpbetrieb Flüssigkeit in den Behälter (4) und im Saugbetrieb Flüssigkeit aus dem Behälter (4) fördert; mit einer Strömungsmesseinrichtung (15), die im Betrieb eine Strömung von Flüssigkeit zwischen der Fördereinrichtung (12) und dem Anschluss (3) ermittelt, **dadurch gekennzeichnet, dass** die Getränkemaschine (1) eine Steuereinrichtung (17) aufweist, die mit der Strömungsmesseinrichtung (15) und der Fördereinrichtung (12) kommunizierend verbunden und derart ausgestaltet ist, dass sie die Fördereinrichtung (12) im Pumpenbetrieb und anschließend im Saugbetrieb betreibt und eine fehlerhafte fluidische Verbindung des Behälters (4) mit dem Anschluss (3) erkennt und eine Fehlermeldung erzeugt, wenn im Saugbetrieb die ermittelte Strömung unterhalb eines vorgegebenen Wertes liegt.

2. Getränkemaschine nach Anspruch 1, **dadurch gekennzeichnet, dass** die Getränkemaschine (1) eine Abtropfschale (16) aufweist, die derart fluidisch mit dem Kanalsystem (2) verbunden ist, dass bei fehlerhafter fluidischer Verbindung zwischen dem Behälter (4) und dem Anschluss (3) im Pumpbetrieb die in Richtung des Anschlusses (3) geförderte Flüssigkeit zumindest teilweise in die Abtropfschale (16) strömt.

3. Getränkemaschine nach Anspruch 1 oder 2, **dadurch gekennzeichnet, dass** im Behälter (4) eine das Kanalsystem (2) pflegende Substanz (6) bevorratet ist.

4. Getränkemaschine nach Anspruch 3, **dadurch gekennzeichnet, dass** die Substanz (6) einen das Kanalsystem (2) entkalkenden Entkalker (7) enthält.

5. Getränkemaschine nach Anspruch 3 oder 4, **dadurch gekennzeichnet, dass** die Substanz (6) einen das Kanalsystem (2) reinigenden Reiniger (8) enthält.

6. Getränkemaschine nach einem der Ansprüche 1 bis 5, **dadurch gekennzeichnet, dass** der Behälter (4) als eine Kartusche (5) ausgebildet ist.

7. Getränkemaschine nach einem der Ansprüche 1 bis 6, **dadurch gekennzeichnet, dass** die Getränkemaschine (1) eine Signaleinrichtung (18) aufweist, die kommunizierend mit der Steuereinrichtung (17) verbunden ist, wobei die Steuereinrichtung (17) derart ausgestaltet ist, dass sie die Fehlermeldung über die Signaleinrichtung (18) als ein Signal ausgibt.

8. Verfahren zum Erkennen einer fehlerhaften fluidischen Verbindung eines austauschbaren Behälters (4) an einem Anschluss (3) einer Getränkemaschine (1), mit den Verfahrensmaßnahmen: Fördern von Flüssigkeit in Richtung des Anschlusses (3); Fördern von Flüssigkeit aus dem Anschluss (3) und Ermitteln der Strömung aus dem Anschluss (3); Erkennen einer fehlerhaften fluidischen Verbindung des Behälters (4) mit dem Anschluss (3), wenn die ermittelte Strömung unterhalb eines vorgegebenen Wertes liegt.

9. Verfahren nach Anspruch 8, **dadurch gekennzeichnet, dass** die fehlerhafte fluidische Verbindung des Behälters (4) mit dem Anschluss (3) erkannt wird, wenn die ermittelte Strömung innerhalb einer vorgegebenen Dauer unterhalb des vorgegebenen Werts fällt.

10. Verfahren nach Anspruch 8 oder 9, **dadurch gekennzeichnet, dass** die fehlerhafte fluidische Verbindung des Behälters (4) mit dem Anschluss (3) erkannt wird, wenn die ermittelte Strömung innerhalb einer vorgegebenen Dauer unterbrochen ist.

## Claims

1. Beverage machine (1), in particular coffee machine (26), with a container (4), which can be attached to a fluidic connector (3) of a channel system (2) of the beverage machine (1) in a replaceable manner; with a conveying facility (12), which in a pumping mode conveys liquid in the direction of the connector (3) and in a suction mode conveys liquid out of the connector (3), in such a manner that, with a fluidic connection between the connector (3) and the container (4), the conveying facility (12) in pumping mode conveys liquid into the container (4) and in suction mode conveys liquid out of the container (4); with a flow measurement facility (15), which during operation ascertains a flow of liquid between the conveying facility (12) and the connector (3), **characterised in that** the beverage machine (1) has a control facility (17), which is communicatively connected to the flow measurement facility (15) and the conveying facility (12) and is embodied in such a manner that it operates the conveying facility (12) in pumping mode and subsequently in suction mode and identifies a faulty fluidic connection of the container (4) to the connector (3) and generates an error message if the ascertained flow lies below a predefined value in suction mode.

2. Beverage machine according to claim 1, **characterised in that** the beverage machine (1) has a drip tray (16), which is fluidically connected to the channel system (2) in such a manner that in the event of a faulty fluidic connection between the container (4) and the connector (3) in pumping mode the liquid conveyed in the direction of the connector (3) flows at least partially into the drip tray (16).

3. Beverage machine according to claim 1 or 2, **characterised in that** a substance (6) which maintains the channel system (2) is stocked in the container (4).

4. Beverage machine according to claim 3, **characterised in that** the substance (6) contains a descaling agent (7) which descales the channel system (2).

5. Beverage machine according to claim 3 or 4, **characterised in that** the substance (6) contains a cleaning agent (8) which cleans the channel system (2).

6. Beverage machine according to one of claims 1 to 5, **characterised in that** the container (4) is embodied as a cartridge (5).

7. Beverage machine according to one of claims 1 to 6, **characterised in that** the beverage machine (1) has a signal facility (18), which is communicatively connected to the control facility (17), wherein the control facility (17) is embodied in such a manner that it outputs the error message via the signal facility (18) as a signal.

8. Method for identifying a faulty fluidic connection of a replaceable container (4) at a connector (3) of a beverage machine (1), with the method measures: conveying liquid in the direction of the connector (3); conveying liquid out of the connector (3) and ascertaining the flow out of the connector (3); identifying a faulty fluidic connection of the container (4) to the connector (3) when the ascertained flow lies below a predefined value.

9. Method according to claim 8, **characterised in that** the faulty fluidic connection of the container (4) to the connector (3) is identified when the ascertained flow falls below the predefined value within a predefined duration.

10. Method according to claim 8 or 9, **characterised in that** the faulty fluidic connection of the container (4) to the connector (3) is identified when the ascertained flow is interrupted within a predefined duration.

## Revendications

1. Machine à boissons (1), en particulier machine à café (26), avec un récipient (4) qui peut être fixé de manière interchangeable à un raccordement fluidique (3) d'un système de canaux (2) de la machine à boissons (1) ; avec un dispositif de transport (12) qui, en mode pompe, achemine du liquide en direction du raccordement (3) et en mode d'aspiration, achemine du liquide depuis le raccordement (3), de sorte qu'en cas de liaison fluidique entre le raccordement (3) et le récipient (4), le dispositif de transport (12) achemine le liquide dans le récipient (4) en mode pompe et le liquide depuis le récipient (4) en mode d'aspiration ; avec un dispositif de mesure de débit (15) qui, pendant le fonctionnement, détermine un débit de liquide entre le dispositif de transport (12) et le raccordement (3), **caractérisée en ce que** la machine à boissons (1) comprend un dispositif de commande (17) qui est relié au dispositif de mesure de débit (15) et au dispositif de transport (12) de manière communicante et est agencé de manière à faire fonctionner le dispositif de transport (12) en mode pompe puis en mode d'aspiration et détecte une liaison fluidique défectueuse du récipient (4) au raccordement (3) et génère un message d'erreur, si le débit déterminé est inférieur à une valeur prédéterminée en mode d'aspiration.

2. Machine à boissons selon la revendication 1, **caractérisée en ce que** la machine à boissons (1) comprend un bac d'égouttement (16) qui est relié fluidiquement au système de canaux (2) de façon à ce qu'en cas de liaison fluidique défectueuse entre le récipient (4) et le raccordement (3) en mode pompe, le liquide acheminé en direction du raccordement (3) s'écoule au moins partiellement dans le bac d'égouttement (16).

3. Machine à boissons selon la revendication 1 ou 2, **caractérisée en ce qu'**une substance (6) qui entretient le système de canaux (2) est stockée dans le récipient (4).

4. Machine à boissons selon la revendication 3, **caractérisée en ce que** la substance (6) contient un détartrant (7) qui détartre le système de canaux (2).

5. Machine à boissons selon la revendication 3 ou 4, **caractérisée en ce que** la substance (6) contient un nettoyant (8) qui nettoie le système de canaux (2).

6. Machine à boissons selon l'une des revendications 1 à 5, **caractérisée en ce que** le récipient (4) est conçu sous forme de cartouche (5).

7. Machine à boissons selon l'une des revendications 1 à 6, **caractérisée en ce que** la machine à boissons (1) comprend un dispositif de signalisation (18) qui est relié de manière communicante au dispositif de commande (17), le dispositif de commande (17) étant agencé de façon à ce qu'il émette le message d'erreur via le dispositif de signalisation (18) sous forme de signal.

8. Procédé de détection d'une liaison fluidique défectueuse d'un récipient (4) interchangeable à un raccordement (3) d'une machine à boissons (1), le procédé comportant les étapes suivantes : l'acheminement du liquide en direction du raccordement (3) ; l'acheminement du liquide depuis le raccordement (3) et la détermination du débit depuis le raccordement (3) ; la détection d'une liaison fluidique défectueuse du récipient (4) avec le raccordement (3) si le débit déterminé est inférieur à une valeur prédéterminée.

9. Procédé selon la revendication 8, **caractérisé en ce que** la liaison fluidique défectueuse du récipient (4) avec le raccordement (3) est détectée si le débit déterminé tombe pendant une durée prédéterminée en dessous de la valeur prédéterminée.

10. Procédé selon la revendication 8 ou 9, **caractérisé en ce que** la liaison fluidique défectueuse du récipient (4) avec le raccordement (3) est détectée si le débit déterminé est interrompu pendant une durée prédéterminée.
